# EUROPÄISCHE PATENTSCHRIFT

(11) **EP 0 997 347 B1**
(45) Veröffentlichungstag und Bekanntmachung des Hinweises auf die Patenterteilung: **18.08.2004**
(21) Anmeldenummer: 99121022.0
(22) Anmeldetag: 21.10.1999
(51) Int. Cl.: B60R 16/02

(54) **Verfahren und System zur Umschaltung eines Steuergerätes, insbesondere eines Kraftfahrzeuges**
Procedure and system for mode switching of a vehicle control apparatus
Procédé et système pour changer le mode d'opération d'un appareil de commande d'un véhicule

(30) Priorität: 29.10.1998 DE 19849809
(43) Veröffentlichungstag der Anmeldung: 03.05.2000
(73) Patentinhaber: Siemens Aktiengesellschaft, 80333 München (DE)
(72) Erfinder: Hartmann, Stefan, 55278 Hahnheim (DE); Volkmar, Kai, 71701 Schwieberdingen (DE)

(56) Entgegenhaltungen:
- EP-A- 0 292 644
- WO-A-98/13567
- DE-A- 19 707 436

## Beschreibung

Die Erfindung betrifft ein Verfahren und ein System zur Umschaltung eines Steuergerätes vom Betriebsmode in einen Programmiermode, insbesondere für Kraftfahrzeuge gemäß dem Oberbegriff des Patentanspruchs 1.

Aus der gattungsbildenden DE 37 17 012 A1 ist ein Verfahren zur Umschaltung eines digitalen Steuergerätes bekannt. Dieses Steuergerät ist mit einer Diagnoseschnittstelle versehen, über welche dem Steuergerät ein Signal zugeführt wird, wobei dieses Signal eine Umschaltung des Steuergerätes von einem Betriebsmode in einen Programmiermode bewirkt.

Um dem Steuergerät mitzuteilen, dass ein Umschalten vom Betriebsmodus in den Programmiermodus gewünscht wird, muss das Signal mindestens 2,5 Sekunden an der Diagnoseschnittstelle anliegen. Weiterhin ist Voraussetzung, dass das Fahrzeug bei der Umschaltung des Steuergerätes sich nicht in Bewegung befindet. Daher wird die Fahrzeuggeschwindigkeit detektiert und nur im Stillstand eine Umprogrammierung zugelassen.

In der WO 98 13567 A ist ein Umschalten des Steuergerätes mittels eines Dauersignales ohne Speicherverändenang offenbart.

Gemäß DE 197 07 436 A wird an einem zweiten Eingang des Steuergerätes ein Signal angelegt, das das Steuergerät bei dessen Einschalten in den Programmiermodus überführt.

Die beschriebenen Verfahren bieten aber keine ausreichende Sicherheit, um eine Umprogrammierung des Steuergerätes durch unautorisierte Personen zu verhindern.

Der Erfindung liegt somit die Aufgabe zugrunde, ein Verfahren zum Umschalten eines Steuergerätes von einem betriebsmode in einen Programmiermode anzugeben, welches einen ausreichenden Schutz vor unautorisierter Umprogrammierung des Steuergerätes gewährleistet und trotzdem einfach zu handhaben ist.

Erfindungsgemäß wird die Aufgabe durch die Merkmale des Patentanspruchs 1 gelöst.

Der Vorteil der Erfindung besteht darin, dass durch diese einfache Maßnahme, eine Information abgespeichert wird, die nach dem Aus- und wieder Einschalten des Steuergerätes erkannt und zur Umschaltung des Steuergerätes in den Programmiermodus genutzt wird. Dies ist insbesondere beim Ausfall der Betriebsspannung vorteilhaft.

Insbesondere bei einer permanenten Datenspeicherung in Kraftfahrzeugen ist es notwendig, aktuelle Betriebsdaten und Programme laufend anzupassen. Dabei bietet dieses Verfahren eine komfortable Möglichkeit der Umschaltung des Steuergerätes von dem Betriebsmodus in den Programmiermodus bei optimaler Ausnutzung an sich im Steuergerät vorhandener Speichereinrichtungen.

Vorteilhafterweise wird durch das Signal zur Umschaltung des Steuergerätes der Inhalt eines Speicherplatzes des Festwertspeichers geändert. Auf die Eingabe von komplizierten Zugangscodes und deren Abfrage kann verzichtet werden, da das Umschaltsignal nur durch eine spezielle Hardware erzeugt werden kann.

Eine besonders einfache Möglichkeit die Umschaltinformation in den Festwertspeicher einzugeben, besteht darin, dass ein an sich im Festwertspeicher vorhandenes Diagnosebit geändert wird und so die Umschaltinformation erzeugt wird.

Nach Abschluß des Programmiervorganges wird die Umschaltinformation aus dem Festwertspeicher automatisch durch den Rechner des Steuergerätes gelöscht, indem das Diagnosebit wieder in seinen Ursprungszustand zurückgesetzt wird.

In einer Weiterbildung wird nach Erkennen der Umschaltinformation durch das Steuergerät ein an sich vorhandener Programmladealgorithmus des Steuergerätes aktiviert und anschließend von einer externen Recheneinheit ein neues Betriebsprogramm für das Steuergerät eingelesen.

Eine weitere Ausgestaltung der Erfindung betrifft ein System nach Anspruch 6.

Durch die Speicherung der Umschaltinformation in dem an sich für andere Zwecke vorhandenen Festwertspeicher werden Speicherplätze in anderen Datenspeichern der Recheneinheit nicht beansprucht. Insbesondere durch die Verwendung des Diagnosebits wird der Bedarf an Speicherplatz auf ein Minimum reduziert. Zusätzlicher Aufwand zur Verschlüsselung der Umschaltinformation entfällt.

Vorteilhafterweise wird das Signal zur Umschaltung des Steuergerätes durch ein an sich vorhandenes Diagnosegerät erzeugt.

Nach Einstellen des Programmiermodes wird ein neues Betriebsprogramm fürdas Steuergerät zunächst in einen Arbeitsspeicher der Recheneinheit übertragen und nach Löschung der Speicherplätze im Festwertspeicher, welche ein vorhergehendes Betriebsprogramm enthalten, wird das neue Betriebsprogramm anschließend in den Festwertspeicher übertragen.

Vorteilhafterweise werden dabei die Speicherplätze des Arbeitsspeichers nach der erfolgten Übertragung in den Festwertspeicher gelöscht und können für weitere Betriebsabläufe des Steuergerätes genutzt werden.

In einer Ausgestaltung wird das neue Betriebsprogamm von einer externen Recheneinheit über eine Steuergeräteanpassungseinheit an das zu programmierende Steuergerät übertragen. Auf diese Art und Weise kann das neue Betriebsprogramm beispielsweise in einem PC erstellt werden und erst nach abgeschlossenen Arbeiten wird das fertige Programm in das Steuergerät übertragen.

In einer Ausgestaltung ist die Steuergeräteanpassungseinheit zur Anpassung an unterschiedliche Schnittstellen und Bussysteme frei konfigurierbar. Das hat den Vorteil, daß in Abhängigkeit von der Architektur des Steuergerätes nicht extra für jedes Steuergerät eine Anpassungsschaltung erstellt werden muß, sondern durch einfache Verknüpfungen innerhalb der Steuergeräteanpassungseinheit für jedes Steuergerät die richtige Anpassung einfach softwaremäßig erstellt werden kann.

Die Erfindung läßt zahlreiche Ausführungsformen zu. Eine davon soll anhand der in der Zeichnung dargestellten Figuren näher erläutert werden.

Es zeigen:
- Fig. 1: erfindungsgemäße Programmiereinrichtung
- Fig. 2: Verfahren zur Erzeugung einer Umschaltinformation mit Hilfe der erfindungsgemäßen Programmiereinrichtung
- Fig. 3: Steuergeräteänpassungseinheit

Gleiche Merkmale sind mit gleichen Bezugszeichen gekennzeichnet.

Bei Einrichtungen mit Mikrorechnern ist das zum Betrieb des Mikrorechners notwendige Programm in Festwertspeichern abgelegt. Für eine nachträgliche Programmierung sind verschiedene Festwertspeicher, z. B EEPROM oder Flash-Speicher bekannt geworden. Insbesondere bei dem Einsatz von solchen Mikrorechnern in Steuergeräten von Kraftfahrzeugen, wo eine Vielfalt von Daten verarbeitet werden muß, ist eine Umprogrammierung des Festwertspeichers notwendig. Dabei werden nicht nur Daten sondern auch ganze Programme laufend angepaßt.

Für fertig aufgebaute Steuergeräte werden viele verschiedene Steuer- und Regelungsabläufe angewendet. Kraftfahrzeugtechnische Anwendungen sind beispielsweise die Regelung der Einspritzmenge, ABS, Leerlaufregelung oder Abstands- und Geschwindigkeitsregelungen. Im Festwertspeicher sind die jeweils erforderliche Betriebsprogramme für das Steuergerät und die zugehörigen Parameter gespeichert.

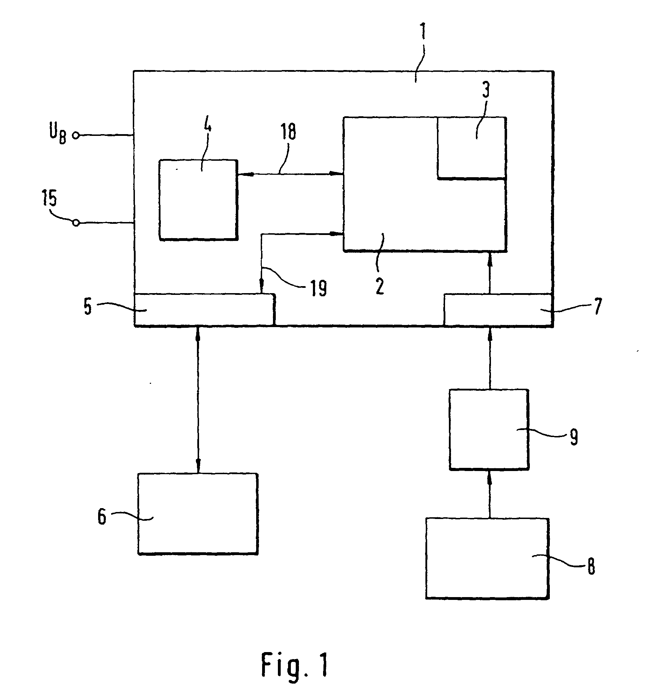

Figur 1 zeigt ein Steuergerät 1, wie es in Kraftfahrzeugen eingesetzt wird.

Das Steuergerät 1 ist dabei mit der Batteriespannung U_{B} und mit Klemme 15 des Kraftfahrzeuges verbunden. Das Steuergerät 1 enthält einen Mikrorechner 2, welcher einen Arbeitsspeicher RAM 3 aufweist. Der Mikrorechner 2 ist über eine bidirektionale Datenleitung 18 mit einem Festwertspeicher 4 verbunden, welcher hier als Flash-Baustein ausgebildet ist.

Das Steuergerät 1 weist eine Diagnoseschnittstelle 5 auf, an welche ein externes Diagnosegerät 6 anschließbar ist. Diese Diagnoseschnittstelle 5 ist bidirektional (Leitung 19) mit dem Mikrorechner 2 verbunden.

Des weiteren weist das Steuergerät 1 eine serielle Schnittstelle 7 auf, über welche von einer externen Recheneinheit 8, z. B einem PC neue Daten in das Steuergerät 1 eingegeben werden, wobei zwischen der Schnittstelle 7 und dem PC 8 eine Steuergeräteanpassungseinheit 9 geschaltet ist.

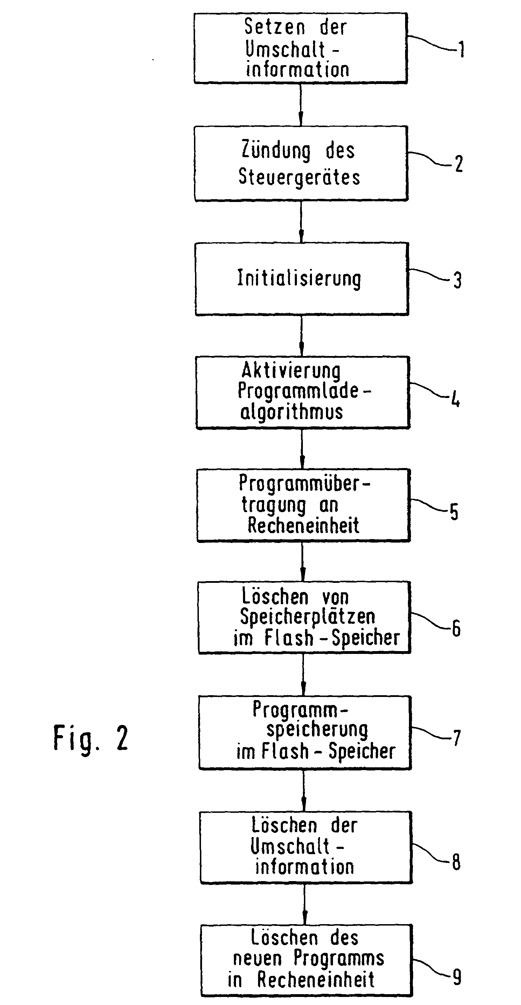

Mit Hilfe der Figur 2 soll der Ablauf zur Änderung eines Betriebsprogramms in dem Flash-Speicher 4 erläutert werden.

In einem ersten Schritt wird bei Vorliegen eines Signales des Diagnosegerätes 6 durch den Mikrorechner 2 im Flash-Speicher 4 ein an sich vorhandenes Diagnosebit geändert. Nach einem sich anschließenden Reset des Mikrorechners 2 erfolgt eine Initialisierung zwischen dem Mikrorechner 2 und dem Flash-Speicher 4 (Schritt 2). Dabei wird von dem Mikrorechner 2 das geänderte Diagnosebit gelesen. Auf diese Art und Weise erhält der Mikrorechner 2 die Information, daß ein neues Betriebsprogramm in den Flash-Speicher 4 eingelesen werden soll.

Im Schritt 4 aktiviert der Mikrorechner 2 eine, in seinem Arbeitsspeicher RAM 3 an sich vorhandene Programmladeroutine. Im Schritt 5 wird von dem externen PC 8 über die Schnittstelle 7 das neue Betriebsprogramm an den Arbeitsspeicher 3 des Mikrorechners 2 übertragen. Gleichzeitig werden im Schritt 6 die benötigten Speicherplätze durch den Mikrorechner 2 im Flash-Speicher 4 gelöscht. Dabei wird gleichzeitig ein altes Betriebsprogramm des Steuergerätes eleminiert. In dem sich anschließenden Schritt 7 beschreibt der Mikrorechner 2 die so vorbereiteten Speicherplätze des Flash-Speichers 4 mit dem im Arbeitsspeicher 3 abgelegten neuen Programm. Nach Abschluß der Umprogrammierung des Flash-Speichers 4 wird das Diagnosebit auf normalen Betrieb gesetzt (Schritt 9). In dem sich anschließenden Schritt 10 wird der Arbeitsspeicher 3 des Mikrorechners 2 gelöscht und steht für andere Aufgaben zur Verfügung.

Mit dem jetzt eingenommenen Zustand des Diagnosebits können normale Diagnosearbeiten durchgeführt werden. So wird mit Hilfe des Diagnosebits nicht nur die Einleitung einer Diagnose durch den Mikrorechner 2 ermöglicht, sondern es wird gleichzeitig zur Umprogrammierung des Mikrorechners genutzt.

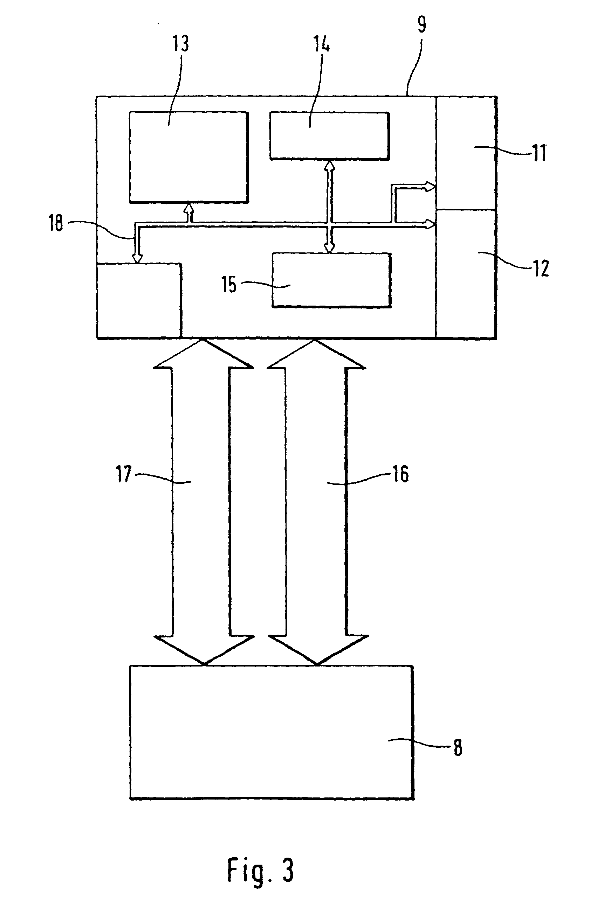

Gemäß Figur 3 soll noch näher auf die Steuergeräteanpassungseinheit 9 eingegangen werden, welches die Übertragung von Betriebsdaten und neuen Betriebsprogrammen von dem Personalcomputer 8 auf ein Steuergerät beliebiger Konfiguration ermöglicht.

Soll nun ein neues Betriebsprogramm geladen werden, was im PC 8 vorliegt, so wird dieses über eine serielle Datenleitung 17 an die Steuergeräteanpassungseinheit 9 übertragen.

Diese Steuergeräteanpassungseinheit 9 besteht aus einem Rechenkem 13, einem Flash-Speicher 14 und einem Arbeitsspeicher 15. Desweiteren weist diese Steuergeräteanpassungseinheit 9 eine Busschnittstelle 11, eine serielle Schnittstelle 12 und einen A/D-Wandler 10 auf. Je nach Konfiguration des zu programmierenden Steuergerätes 1 ist das entsprechende Anpassungsprogramm im Flashspeicher 14 abgelegt.

Die Steuergeräte eines Kraftfahrzeuges sind heute üblicherweise über einen CAN-Bus verbunden. In diesem Falle würde durch das Anpassungsprogramm der Steuergeräteanpassungseinheit 9 die Busschnittstelle 11 aktiviert werden und das neue Betriebsprogramm vom Personalcomputer 8 über die Busschnittstelle 11 an das in dieser Figur nicht weiter dargestellte Steuergerät 1 übertragen werden. Haben die Steuergeräte andere Konfigurationen, so können durch entsprechende Voreinstellungen in der Steuergeräteanpassungseinheit 9, alternativ die serielle Schnittstelle 12 oder aber auch der A/D-Wandler 10 aktiviert werden, um somit einen Datenaustausch zu ermöglichen.

## Patentansprüche

1. Verfahren zur Umschaltung eines Steuergerätes von einem Betriebsmode in einen Programmiermode, insbesondere für ein Steuergerät eines Kraftfahrzeuges, wobei die Umschaltung durch ein extern dem Steuergerät zugeführtes Signal erfolgt, **dadurch gekennzeichnet, dass** durch das externe Signal eine Umschaltinformation in einem, mindestens ein Betriebsprogramm und/oder in vorgegebenen Abständen aktualisierte Daten für das Steuergerät (1) speichernden Festwertspeicher (4) erzeugt wird, welche bei Aktivierung des Steuergerätes (1) die Umschaltung in den Programmiermode bewirkt.

2. Verfahren nach Anspruch 1, **dadurch gekennzeichnet, dass** durch das Signal zur Umschaltung des Steuergerätes (1) der Inhalt eines Speicherplatzes des Festwertspeichers (4) geändert wird.

3. Verfahren nach Anspruch 2, **dadurch gekennzeichnet, dass** die Umschaltinformation durch Änderung eines Diagnosebits im Festwertspeicher (4) erzeugt wird.

4. Verfahren nach Anspruch 2 oder 3, **dadurch gekennzeichnet, dass** nach Erkennen der Umschaltinformation ein Programmladealgorithmus des Steuergerätes (1) aktiviert und anschließend ein neues Betriebsprogramm des Steuergerätes (1) eingelesen wird.

5. Verfahren nach Anspruch 3, **dadurch gekennzeichnet, dass** nach Abschluss des Programmiervorganges die Umschaltinformation aus dem Festwertspeicher (4) gelöscht wird

6. System zur Umschaltung eines Steuergerätes von einem Betriebsmode in einen Programmiermode, insbesondere für ein Kraftfahrzeug, mit einem Steuergerät und einer ein externes Signal zur Umschaltung des Steuergerätes vom Betriebsmode in den Programmiermode erzeugenden Einrichtung, wobei das Steuergerät eine Recheneinheit aufweist, die mit einem Festwertspeicher und einer dem Steuergerät das externe Signal zuführenden Diagnoseschnittstelle verbunden ist,
**dadurch gekennzeichnet, daß** das Signal zur Umschaltung des Steuergerätes (1) in den Betriebsmode eine Umschaltinformation in dem über die Recheneinheit (2) mit der Diagnoseschnittstelle (5) verbundenen, ein Betriebsprogramm und/oder in vorgegebenen Abständen aktualisierte Daten des Steuergerätes (1) speichernden Festwertspeicher (4) erzeugt, welche nach Aktivierung der Recheneinheit (2) durch diese im Festwertspeicher (4) gelesen wird und nach dem Lesen der Umschaltinformation die Recheneinheit (2) den Programmiermode aktiviert

7. System nach Anspruch 6, **dadurch gekennzeichnet, daß** das Signal zur Umschaltung des Steuergerätes (1) durch ein Diagnosegerät (6) auslösbar ist.

8. System nach Anspruch 6 oder 7, **dadurch gekennzeichnet, daß** nach Einstellung des Programmiermodes ein neues Betriebsprogramm des Steuergerätes (1) zunächst in einen Arbeitsspeicher (3) der Recheneinheit (2) übertragen wird und nach Löschung der Speicherplätze im Festwertspeicher (4), welche ein vorhergehendes Betriebsprogramm enthalten, anschließend in den Festwertspeicher (4) übertragen wird.

9. System nach Anspruch 8, **dadurch gekennzeichnet, daß** das neue Betriebsprogramm von einer externen Recheneinheit (8) über eine Steuergeräteanpassungseinheit (9) an das zu programmierende Steuergerät (1) übertragen wird.

10. System nach Anspruch 9, **dadurch gekennzeichnet, daß** die Steuergeräteanpassungseinheit (9) zur Anpassung an unterschiedliche Schnittstellen und Bussysteme (10, 11, 12) frei konfigurierbar ist.

## Claims

1. Method for switching over a control device from an operating mode into a programming mode, in particular for a control device of a motor vehicle, the switching over being carried out by means of a signal which is fed to the control device externally, **characterized in that** the external signal generates a switchover information item in a read-only memory (4) which stores at least an operating program and/or data for the control device (1) which is updated at predefined intervals, which switchover information item brings about the switching over into the programming mode when the control device (1) is activated.

2. Method according to Claim 1, **characterized in that** the content of a memory location of the read-only memory (4) is changed by the signal for switching over the control device (1).

3. Method according to Claim 2, **characterized in that** the switchover information item is generated by changing a diagnostic bit in the read-only memory (4).

4. Method according to Claim 2 or 3, **characterized in that** a program-loading algorithm of the control device (1) is activated after the switchover information item has been detected, and a new operating program of the control device (1) is then read in.

5. Method according to Claim 3, **characterized in that** the switchover information item is cleared from the read-only memory (4) after the programming operation has been terminated.

6. System for switching over a control device from an operating mode into a programming mode, in particular for a motor vehicle, having a control device, and a device which generates an external signal for switching over the control device from the operating mode into the programming mode, the control device having an arithmetic unit which to a read-only memory and a diagnostic interface which supplies the external signal to the control device, **characterized in that** the signal for switching over the control device (1) into the operating mode generates a switchover information item in the read-only memory (4) which is connected to the diagnostic interface (5) via the arithmetic unit (2) and stores an operating program and/or data of the control device (1) which is updated at predefined intervals, which information item is read into the read-only memory (4) by the arithmetic unit (2) after said arithmetic unit (2) has been activated, and the arithmetic unit (2) activates the programming mode after the switchover information item has been read.

7. System according to Claim 6, **characterized in that** the signal for switching over the control device (1) can be triggered by means of a diagnostic device (6).

8. System according to Claim 6 or 7, **characterized in that** a new operating program of the control device (1) is firstly transmitted into a main memory (3) of the arithmetic unit (2) after the programming mode has been set, and is then transmitted into the read-only memory (4) after the memory locations in the read-only memory (4) which contain a previous operating program have been cleared.

9. System according to Claim 8, **characterized in that** the new operating program is transmitted from an external arithmetic unit (8) via a control device adaptation unit (9) to the control device (1) which is to be programmed.

10. System according to Claim 9, **characterized in that** the control device adaptation unit (9) is freely configurable in order to adapt to different interfaces and bus systems (10, 11, 12).

## Revendications

1. Procédé permettant de commuter un appareil de commande d'un mode d'exploitation en un mode de programmation, destiné notamment à un appareil de commande d'un véhicule automobile, la commutation étant provoquée par un signal appliqué de l'extérieur à l'appareil de commande, **caractérisé par le fait que**, en raison du signal externe, une information de commutation est générée dans une mémoire morte (4) mémorisant au moins un programme d'exploitation et/ou des données actualisées à des espaces de temps donnés et destinées à l'appareil de commande (1), ladite information de commutation provoquant, lorsque l'appareil de commande (1) est activé, la commutation dans le mode de programmation.

2. Procédé selon la revendication 1 **caractérisé par le fait que**, en raison du signal destiné à la commutation de l'appareil de commande (1), le contenu d'un emplacement de la mémoire morte (4) est modifié.

3. Procédé selon la revendication 2 **caractérisé par le fait que** l'information de commutation est générée par modification d'un bit de diagnostic dans la mémoire morte (4).

4. Procédé selon la revendication 2 ou 3 **caractérisé par le fait que**, une fois l'information de commutation reconnue, un algorithme de chargement d'un programme de l'appareil de commande (1) est activé et, ensuite, un nouveau programme d'exploitation de l'appareil de commande (1) est entré.

5. Procédé selon la revendication 3 **caractérisé par le fait que**, à la fin du processus de programmation, l'information de commutation est effacée dans la mémoire morte (4).

6. Système permettant de commuter un appareil de commande d'un mode d'exploitation en un mode de programmation, destiné notamment à un véhicule automobile, comportant un appareil de commande et un dispositif générant un signal externe destiné à commuter l'appareil de commande du mode d'exploitation dans le mode de programmation, l'appareil de commande ayant une unité de calcul qui est reliée à une mémoire morte et à une interface de diagnostic appliquant le signal externe à l'appareil de commande, **caractérisé par le fait que** le signal destiné à commuter l'appareil de commande (1) dans le mode d'exploitation génère une information de commutation dans la mémoire morte (4), qui est reliée, par l'intermédiaire de l'unité de calcul (2), à l'interface de diagnostic (5) et qui mémorise un programme d'exploitation et/ou des données de l'appareil de commande actualisées à des intervalles de temps donnés, ladite information de commutation étant, après l'activation de l'unité de calcul (2) lue par celle-ci dans la mémoire morte (4) et que, après la lecture de l'information de commutation, l'unité de calcul active le mode de programmation.

7. Système selon la revendication 6 **caractérisé par le fait que** le signal destiné à commuter l'appareil de commande (1) peut être déclenché par un appareil de diagnostic (6).

8. Système selon la revendication 6 ou 7 **caractérisé par le fait que**, après le réglage du mode de programmation, un nouveau programme d'exploitation de l'appareil de commande (1) est d'abord transmis dans une mémoire centrale (3) de l'unité de calcul (2) et ensuite, après effacement des emplacements de mémoire dans la mémoire morte (4), qui renferment un programme d'exploitation antérieur, transmis dans la mémoire morte (4).

9. Système selon la revendication 8 **caractérisé par le fait que** le nouveau programme d'exploitation est transmis par une unité de calcul externe (8), par l'intermédiaire d'une unité d'adaptation aux appareils de commande (9), à l'appareil de commande (1) à programmer.

10. Système selon la revendication 9 **caractérisé par le fait que** l'unité d'adaptation aux appareils de commande (9) peut être configurée à volonté pour permettre l'adaptation à d iverses interfaces et d ivers s ystèmes de b us (10, 11, 12).
